Europäisches Patentamt

European Patent Office

Office européen des brevets

(19)

(11) Veröffentlichungsnummer: **0 157 759**
**B1**

(12) **EUROPÄISCHE PATENTSCHRIFT**

(45) Veröffentlichungstag der Patentschrift:
**10.01.90**

(51) Int. Cl.⁴: **G 01 M 3/32, B 65 D 90/50**

(21) Anmeldenummer: **85890084.8**

(22) Anmeldetag: **02.04.85**

(54) **Verfahren zur permanenten Dichtheitskontrolle von mit Flüssigkeiten gefüllten Flachbodentanks.**

(30) Priorität: **03.04.84 AT 1124/84**

(43) Veröffentlichungstag der Anmeldung:
**09.10.85 Patentblatt 85/41**

(45) Bekanntmachung des Hinweises auf die Patenterteilung:
**10.01.90 Patentblatt 90/2**

(84) Benannte Vertragsstaaten:
**CH DE GB IT LI LU NL SE**

(56) Entgegenhaltungen:
**WO-A-82/01590**
**DE-A- 1 150 248**
**NL-A- 267 611**

(73) Patentinhaber: **Kurt Thomas Pörner Gesellschaft m.b.H,
Hamburgerstrasse 9, A-1050 Wien (AT)**

(72) Erfinder: **Der Erfinder hat auf seine Nennung verzichtet**

(74) Vertreter: **Itze, Peter, Dipl.-Ing. et al, Patentanwälte
Dipl.-Ing. Leopold Friebel Dipl.-Ing. Peter Itze
Amerlingstrasse 8, A-1060 Wien (AT)**

ACTORUM AG

## Beschreibung

Die Erfindung bezieht sich auf ein Verfahren zur permanenten Dichtheitskontrolle des Bodens von mit Flüssigkeiten gefüllten Flachbodentanks, welche mit einem doppelten Boden ausgerüstet bzw. auf einer druckfesten Fläche aufgestellt sind, und bei welchen der Zwischenraum zwischen den beiden Behälterböden bzw. zwischen Behälterboden und Aufstandsfläche abgedichtet und zur Gänze mit Kontrollkflüssigkeit gefüllt ist.

Bei als Flachbodentanks ausgebildeten Lagertanks ist es bei gefülltem Tank nur schwer möglich, die Böden hinsichtlich ihrer Dichtheit zu überwachen. Es wurde daher bereits bei mit doppeltem Boden ausgerüsteten Lagertanks versucht, den Zwischenraum zwischen den beiden Böden mit Vakuum zu beaufschlagen und die Aufrechterhaltung des Unterdrucks zu überwachen. In der Praxis hat sich dabei ein langsames, teilweise gänzliches Absinken des Vakuums gezeigt, wobei die Ursachen nicht genau feststellbar sind. Es kann nämlich das Vakuum entweder durch eine Undichtheit eines der Tankböden abgebaut werden, oder aber durch Gasdiffusion durch die Böden. Weiters ändern sich die Druckverhältnisse in dem Zwischenraum zwischen den Böden mit dem Füllungsgrad des Tanks bzw. mit der Art und dem spezifischen Gewicht der eingefüllten Flüssigkeiten. Ein weiterer Nachteil dieser bekannten Ausbildung ist auch darin zu erblicken, daß bei einem Leck im inneren Tankboden Lagergut in den Zwischenraum zwischen den beiden Böden eindringt, was bei brennbaren Flüssigkeiten eine Reparaturschweißung des Tanks verhindert, da der Zwischenraum mit explosiven Dämpfen gefüllt ist.

Die gleichen Nachteile zeigt auch das aus der DE-B-1 150 248 geoffenbarte Verfahren, bei welchem der Zwischenraum einen vom Atmosphärendruck und vom Behälterinnendruck abweichenden Druck aufweist, wobei durch die Überwachung dieses Druckes etwaige Undichtheiten in einer der Wände festgestellt werden. Die statische Überwachung von Drücken bzw. Unterdrücken in einem Gasraum gibt keinen eindeutigen Hinweis auf eine Undichtheit, da z.B. bei einem Vakuum, ein schleichender Gaseintritt auch durch irgendwelche Armaturen usw. auftreten kann, was in umgekehrter Richtung auch bei Überdruck gegeben sein kann. Wenn eine undichte Stelle dabei in der äußeren Haut des Behälters auftritt, so kann die nicht gefunden werden, da eben das Gas ohne sichtbare Spuren aus dem Zwischenraum austreten kann. Der eigentliche Tank kann dabei völlig intakt bleiben, wobei jedoch im Hinblick darauf, daß eben die Undichtheit nicht geortet werden kann, der Tank dennoch stilzulegen ist.

Gemäss WO 82/01590 wurde vorgeschlagen, für eine periodische Dichtheitsprüfung einen Tank vor dem Test mit Druck zu beaufschlagen und das Druckhaltevermögen mit einem Referenzraum zu vergleichen. Ein solches Verfahren ist aufwendig und für eine permanente Drucküberwachung überhaupt nicht brauchbar, da für die Druckmessung ein Referenzraum und eine aufwendige Armaturenschaltung erforderlich ist. Weiters kann in einem solchen Tank ein etwaiger hydrostatischer Druck am Boden des Behälters überhaupt nicht berücksichtigt werden.

Es ist aus der DE-A-2 922 180 auch schon ein Verfahren der eingangs genannten Art bekannt, bei welchem die Kontrollflüssigkeit lediglich unter der durch das Gewicht des Bodens bewirkten Spannung steht, wobei der Zwischenraum zu einem entsprechenden Ausgleichsgefäß hin offen ist, in welchem der hydrostatische Druck der im Tank lagernden Flüssigkeit durch einen entsprechenden Druckkpolster, also durch ein kompressibles Medium, ausgeglichen werden muß. Dies bedingt einen komplizierten Regelmechanismus hinsichtlich des aufzubringenden Druckes. Es wird also nur ein Differenzdruck unter unabdingbarer Verwendung eines kompressiblen Mediums, nämlich Druckgas, gemessen, was durch die Kompressibilität des Gases und die erforderlichen Verbindungen zur Flüssigkeit im Behälter und zum Kontrollmedium sowie die damit verbundene Gaslösung in den Flüssigkeiten keine relevante Messung darstellen kann und demnach nur eine Sicherungsfunktion erfüllt.

Der Erfindung liegt die Aufgabe zugrunde, ein Verfahren der eingangs genannten Art zu schaffen, mit welchem die Dichtheit, insbesondere der Böden von Flachbodentanks, zuverlässig überwacht werden kann. Erfindungsgemäß wird diese Aufgabe dadurch gelöst, daß die Kontrollflüssigkeit mit einem Druck beaufschlagt wird, der zum Zeitpunkt der Druckbeaufschlagung über dem im Tankinneren im Bodenbereich herrschenden Druck liegt, wonach zur Druckhaltung der Zwischenraum dicht abgeschlossen wird, wobei dann zur Dichtheitskontrolle der Druck im genannten Zwischenraum und der Druck im Tankinnenraum im Bereich des Tankbodens gemessen und diese Drücke miteinander verglichen werden. Dadurch wird im Zwischenraum ein unzusammendrückbarer Flüssigkeitspolster erzeugt, dessen Druck jeweils um jenen Druck über dem auf dem Tankboden lastenden Druck liegt, mit welchem die Flüssigkeit im Zwischenraum vorgespannt wurde, z.zw. unabhängig vom Bodendruck im Tank bzw. von der Art und dem spezifischen Gewicht des Lagergutes, da der Tankboden als Druckübertragungsmembran wirkt. Es ist dabei für das erfindungsgemäße Verfahren unmaßgeblich, ob die Druckbeaufschlagung der Kontrollflüssigkeit vor dem Befüllen oder nach dem Befüllen des Tanks erfolgt. Weiters wird durch den Flüssigkeitspolster verhindert, daß bei den Befüll- bzw. Entleervorgängen Biegebewegungen des Bodens auftreten, was zu Undichtheiten der Schweißnähte des Bodens führen kann, da bei überlappender Schweißung der Bodenbleche diese nur an der Oberseite verschweißt werden können und daher die Schweißnähte auf Biegung beansprucht werden. In der Praxis hat sich auch gezeigt, daß sich beim Befüllen herkömmlicher Tanks im Boden Falten bilden können, die eine erhöhte Bruchgefahr bedeuten. Durch das erfindungsgemäße Verfahren ist auch die Faltenbildung ausgeschlossen, da auf Grund des erzeugten Flüssigkeitspolsters eine Verformung des Tankbodens bei der Befüllung ausgeschlossen ist.

Vorteilhafterweise kann die Druckbeaufschlagung der Kontrollflüssigkeit vor Füllung des Tanks vorgenommen werden. Dadurch wird erreicht, daß nur der eigentliche Beaufschlagungsdruck eingebracht zu werden braucht und nicht auch der auflastende Druck des Lagergutes überwunden werden muß. Außerdem ist damit auch eine Dichtheitsprobe des Tankbodens ermöglicht, da etwaige Undichtheiten nach der Druckbeaufschlagung erkannt werden können.

Das erfindungsgemäße Verfahren wird nachstehend an Hand der Zeichnung näher erläutert. Es zeigt

Fig. 1 schematisch eine Meßanordnung zur Durchführung des erfindungsgemäßen Verfahrens und

Fig. 2 im Detail eine vorteilhafte Ausführungsvariante zur Abdichtung zwischen Aufstandsfläche und Tankunterkante.

Der Tank 1, welcher sowohl als Festdachtank als auch als Schwimmdachtank ausgebildet sein kann, ist mit einem Flachboden 2 versehen, der über ein Bodenrandblech 3 dicht mit dem Tankmantel 4 verbunden ist. Der Tank ist dabei auf einer druckfesten Aufstandfläche 5 aufgestellt. Die Aufstandsfläche kann dabei entweder ein zweiter – äußerer – Boden, der Boden einer Auffangwanne oder ein flüssigkeitsdichtes Fundament, z.B. eine entsprechende Betonplatte, sein. Das Bodenrandblech 3 ist dabei über eine elastische Dichtung 6 gegenüber der Aufstandsfläche 5 abgedichtet, wobei zwischen dem Flachboden 2 und der Aufstandsfläche 5 ein Zwischenraum 7 freigehalten ist. Die Dichtung 6 wird üblicherweise ein dauerelastischer Kunststoff sein, auf welchen das Bodenrandblech 3 beim Aufbau des Tanks 1 aufgelegt wird.

In den Zwischenraum 7 münden zwei Leitungen 8, 9, wobei die Leitung 8 zur Befüllung des Zwischenraumes mit unter Druck stehender Kontrollflüssigkeit und die Leitung 9 zur Entlüftung dient, zu welchem Zweck die Leitung 9 vom höchsten Punkt des Flachbodens 2 wegführt und mit einem Entlüftungsventil 10 versehen ist. Beide Leitungen 8 bzw. 9 sind über Ventile 10 bzw. 11 abschließbar, wobei in der Leitung 8 zusätzlich noch ein Manometer 12 eingebaut ist. Im Bereich des Tankbodens ist noch ein Manometer 13 angeordnet, mit welchem der Druck im Tankinneren im Bereich des Bodens gemessen wird. Als Kontrollflüssigkeit wird eine korrosionshemmende, umweltverträgliche Flüssigkeit verwendet, welche bevorzugterweise mit dem im Tank gelagerten Produkt verträglich ist. Für die Prüfung auf Undichtheiten kann der Kontrollflüssigkeit ein Kontrastmittel oder kurzlebiges Isotop beigegeben werden.

Zur Durchführung des erfindungsgemäßen Verfahrens wird der Zwischenraum 7, falls dies nicht bereits beim Bau des Tanks durchgeführt wurde, mit der Dichtung 6 nach außen abgedichtet und über die Leitung 8 mit unter Druck stehender Kontrollflüssigkeit gefüllt, wobei die im Zwischenraum 7 befindliche Luft über die Leitung 9 und das Entlüftungsventil 10 entweichen kann. Ist der Zwischenraum 7 luftfrei, dann wird das Entlüftungsventil 10 geschlossen und über die Leitung 8 der gewünschte Druck im Zwischenraum 7 aufgebaut, wonach das Ventil 11 geschlossen wird. Über das Manometer 12 kann überwacht werden, ob der aufgebrachte Druck bestehen bleibt oder abfällt. Fällt er ab, so kann der Tankboden 2 auf Undichtheiten überprüft werden, da das Durchsickern von Kontrollflüssigkeit sofort erkannt werden kann. Läßt sich bei Druckabfall keine undichte Stelle im Tankboden 2 finden, dann liegt die Undichtheit in der Aufstandsfläche 5 oder in der Randabdichtung 6. Der letztgenannte Fall ist von außen erkennbar und leicht zu beheben. Bleibt der Druck im Zwischenraum 7 konstant, dann kann der Tank befüllt werden, wobei der über die Leitung aufgebrachte Druck als Differenzdruck zwischen dem mit dem Manometer 13 über dem Tankboden gemessenen Druck und dem mit dem Manometer 12 im Zwischenraum 7 gemessenen Druck auf Grund der Inkompressibilität der in den Zwischenraum 7 eingebrachten Kontrollflüssigkeit bestehen bleibt.

Wird nun bei gefülltem Tank der Tankboden 2 undicht, so findet ein Druckausgleich zwischen dem Zwischenraum 7 und dem Tankinnenraum statt, wodurch die besagte Druckdifferenz gänzlich wegfällt. Dies ist ein eindeutiges Zeichen, daß der Tankboden 2 undicht ist. Fällt der Druck im Zwischenraum 7 und bleibt der Druck im Tank 1 gleich, dann ist die Aufstandsfläche 5 bzw. die Dichtung 6 zwischen Aufstandsfläche 5 und Bodenrandblech 3 undicht. Sinkt der Druck im Zwischenraum 7 und der im Tank 1 im Bereich des Tankbodens 2 gemessene Druck gleichzeitig, dann ist sowohl der Tankboden 2 als auch die Aufstandfläche 3 bzw. die Dichtung 6 undicht.

Sollte die Undichtheit dabei im Bereich der Dichtung 6 liegen, so ist dies wieder von außen erkennbar und leicht behebbar, ohne den Tank entleeren zu müssen.

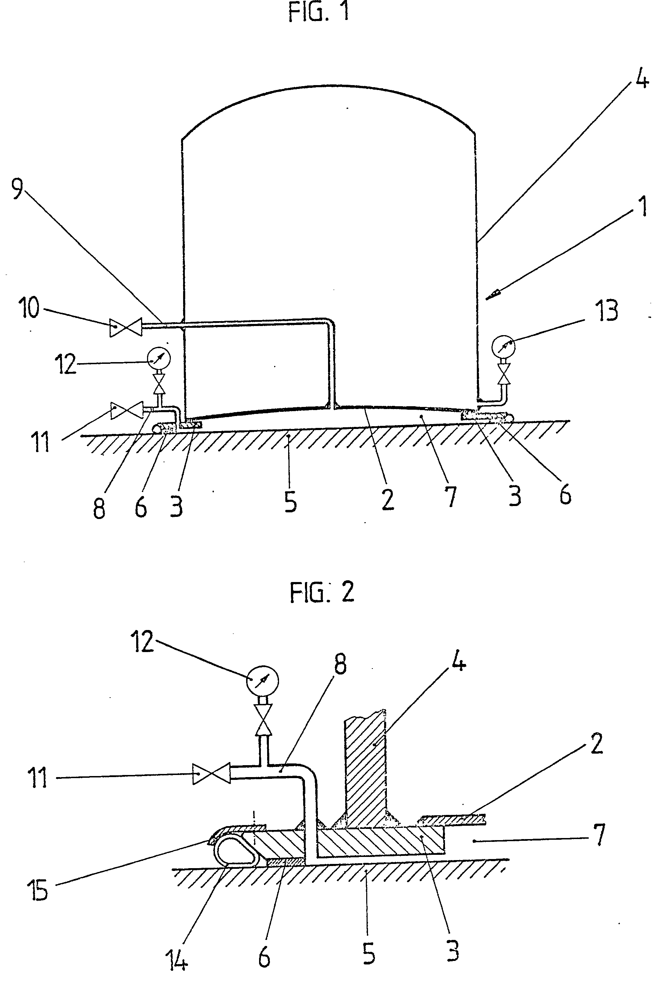

Die Dichtung 6 kann bei bestehenden Tanks auch dadurch eingebracht werden, daß das Bodenrandblech 3 mehrfach angebohrt und durch die Bohrungen die Dichtmasse eingepreßt wird. Es kann jedoch auch die in Fig. 2 im Detail wiedergegebene Dichtungsweise ausschließlich oder zusätzlich angewendet werden. Dazu wird von außen im Bereich der Trennfuge zwischen Bodenrandblech 3 und Aufstandfläche 5 ein flexibler Schlauch 14 an das Bodenrandblech 3 und die Aufstandsfläche 5 angelegt und mit Druck beaufschlagt, wodurch sich der Schlauch sowohl an das Bodenrandblech 3 als auch an die Aufstandsfläche 5 dicht anlegt. Dabei wird durch Haltestreifen 15 ein Abheben des Schlauches 14 vom Boden verhindert. Um ganz sicher eine gute Abdichtung zu erreichen, kann, wie in Fig. 2 dargestellt, das Bodenrandblech außen eine Abschrägung oder eine Kerbe aufweisen, in welche zusätzlich die Dichtung 6 in die Trennfuge eingebracht und dann mittels des Schlauches 14 festgepreßt wird.

Zur Abdichtung der Aufstandsfläche 5 kann über die Leitung 9 ein beim Einbringen fließfähiges Dichtmittel eingebracht werden, welches sich dann nach Aufbringen eines Überdruckes zur Abhebung des Innenbodens ganzflächig und flächendeckend über die Aufstandsfläche verteilt und diese damit abdichtet. Dabei kann aber der Tankboden 2 auch als Schablone dienen, welcher nach Verteilung des Dichtmittels und dessen allfällig erforderlichen Aushärtung, z.B. mittels eines Luftpolsters, von dem Dichtmittel wieder abgehoben wird.

## Patentansprüche

1. Verfahren zur permanenten Dichtheitskontrolle des Bodens von mit Flüssigkeiten gefüllten Flachbodentanks (1), welche mit einem doppelten Boden ausgerüstet bzw. auf einer druckfesten Fläche (5) aufgestellt sind, und bei welchen der Zwischenraum (7) zwischen den beiden Behälterböden bzw. zwischen Behälterboden (2) und Aufstandsfläche (5) abgedichtet und zur Gänze mit Kontrollflüssigkeit gefüllt ist, dadurch gekennzeichnet, daß die Kontrollflüssigkeit mit einem Druck beaufschlagt wird, der zum Zeitpunkt der Druckbeaufschlagung über dem im Tankinneren im Bodenbereich herrschenden Druck liegt, wonach zur Druckhaltung der Zwischenraum (7) dicht abgeschlossen wird, wobei dann zur Dichtheitskontrolle der Druck (12) im genannten Zwischenraum (7) und der Druck (13) im Tankinnenraum im Bereich des Tankbodens (2) gemessen und diese Drücke miteinander verglichen werden.

2. Verfahren nach Anspruch 1, dadurch gekennzeichnet, daß die Druckbeaufschlagung der Kontrollflüssigkeit vor Füllung des Tanks vorgenommen wird.

## Claims

1. A method of permanently monitoring the fluidtightness of the bottom of a flat-bottomed tank (1) filled with fluid, which is provided with a double bottom or is mounted on a pressure-resistant surface (5), and in which the space (7) between the two container bottoms or between the container bottom (2) and the support surface (5) is sealed and entirely filled with monitoring fluid, characterised in that the monitoring fluid is acted upon by a pressure which, at the moment at which the pressure acts, is above the pressure prevailing inside the tank in the vicinity of the bottom, whereupon the space (7) is fluidtightly sealed so as to maintain the pressure and then, for the purpose of monitoring fluidtightness, the pressure (12) in said space (7) and the pressure (13) inside the tank in the vicinity of the tank bottom (2) are measured and these pressures are compared with one another.

2. A method according to Claim 1, characterised in that the pressure is applied to the monitoring fluid before the tank (1) is filled.

## Revendications

1. Procédé pour le contrôle permanent de l'étanchéité du fond de réservoirs (1) à fond plat remplis de liquide, qui sont pourvus d'un double fond ou bien sont placés sur une surface résistante à la pression (5), et dans lesquels l'espace intermédiaire (7) entre les deux fonds du réservoir ou, selon le cas, entre le fond (2) du réservoir et la surface (5) sur laquelle se dresse le réservoir est rendu étanche et est entièrement rempli d'un liquide de contrôle, caractérisé en ce que le liquide de contrôle est soumis à une pression qui, au moment de la mise en pression, est supérieure à la pression régnant à l'intérieur du réservoir dans la région du fond, après quoi l'espace intermédiaire (7) est fermé de façon étanche pour le maintien de la pression, le contrôle de l'étanchéité étant ensuite effectué en mesurant la pression (12) das ledit espace intermédiaire (7) et la pression (113) à l'intérieur du réservoir dans la région du fond (2) du réservoir, et en comparant ces pressions l'une avec l'autre.

2. Procédé selon la revendication 1, caractérisé en ce que la mise en pression du liquide de contrôle est effectuée avant le remplissage du réservoir (1).

## FIG. 1

## FIG. 2